Europäisches Patentamt

European Patent Office

Office européen des brevets

(19)

(11) **EP 1 101 200 B1**

## (12) FASCICULE DE BREVET EUROPEEN

(45) Date de publication et mention
de la délivrance du brevet:
**14.05.2003 Bulletin 2003/20**

(21) Numéro de dépôt: **99936681.8**

(22) Date de dépôt: **03.08.1999**

(51) Int Cl.⁷: $G06T\ 17/20$

(86) Numéro de dépôt international:
**PCT/FR99/01924**

(87) Numéro de publication internationale:
**WO 00/008604 (17.02.2000 Gazette 2000/07)**

(54) **AFFINEMENT SELECTIF DE MAILLES**

SELEKTIVE VERFEINERUNG DER MASCHEN

SELECTIVE MESH REFINEMENT

(84) Etats contractants désignés:
**DE GB IT SE**

(30) Priorité: **03.08.1998 FR 9810097**

(43) Date de publication de la demande:
**23.05.2001 Bulletin 2001/21**

(73) Titulaires:
• **FRANCE TELECOM**
**75015 Paris (FR)**
• **TELEDIFFUSION DE FRANCE**
**75732 Paris Cédex 15 (FR)**

(72) Inventeur: **GIOIA, Patrick**
**F-35700 Rennes (FR)**

(74) Mandataire: **Vidon, Patrice**
**Cabinet Patrice Vidon**
**Le Nobel (Bât. A)**
**Technopôle Atalante**
**2, allée Antoine Becquerel**
**BP 90333**
**35703 Rennes Cedex 7 (FR)**

(56) Documents cités:
**EP-A- 0 789 330**

• **ECK M ET AL: "MULTIRESOLUTION ANALYSIS OF ARBITRARY MESHES" COMPUTER GRAPHICS PROCEEDINGS, LOS ANGELES, AUG. 6 - 11, 1995, 6 août 1995 (1995-08-06), pages 173-182, XP000546226 COOK R**
• **GROSS M H ET AL: "EFFICIENT TRIANGULAR SURFACE APPROXIMATIONS USING WAVELETS AND QUADTREE DATA STRUCTURES" IEEE TRANSACTIONS ON VISUALIZATION AND COMPUTER GRAPHICS, vol. 2, no. 2, juin 1996 (1996-06), pages 130-143, XP000637707**
• **CIGNONI P ET AL: "A comparison of mesh simplification algorithms" COMPUTERS AND GRAPHICS, vol. 22, no. 1, 25 février 1998 (1998-02-25), page 37-54 XP004123425**
• **BRUNET P: "Including shape handles in recursive subdivision surfaces" COMPUTER AIDED GEOMETRIC DESIGN, vol. 5, no. 1, 1988, pages 41-50, XP002085289**

EP 1 101 200 B1

**EP 1 101 200 B1**

**Description**

Le domaine de l'invention est celui du codage d'images ou d'éléments d'images. Plus précisément, l'invention concerne la représentation et le codage adaptatifs de scènes (ou d'objets d'une scène) en trois dimensions (3D) représentées par des maillages.

L'invention trouve des applications dans tous les domaines où il est souhaitable de réduire le nombre d'informations nécessaires pour représenter efficacement une image numérique, pour la stocker et/ou la transmettre. Par exemple, l'invention peut être utilisée pour la transmission d'images via le réseau Internet. Dans ce cadre, elle permet l'animation de scènes 3D avec une visualisation en temps réel, bien que le débit ne soit pas constant ni garanti. L'invention peut, dans ce cas, être une primitive d'un langage de transmission de données tel que VRML.

Parmi les autres applications envisageables, on peut citer le stockage de données animées sur CD-ROM (ou support de données équivalent), les applications multi-utilisateurs, la télévision numérique,...

L'invention propose une amélioration aux méthodes dites "à ondelettes", qui permettent de représenter un maillage comme une succession de détails ajoutés à un maillage de base. La théorie générale de cette technique est notamment décrite dans l'article de M. Lounsberry, T. DeRose et J.Warren, "Multiresolution analysis for surfaces or arbitrary topological type" (ACM Transaction on Graphics, Vol.16, No. 1, pp.34-73).

Selon cette technique, un maillage est donc représenté par une suite de coefficients qui correspondent aux coordonnées dans une base d'ondelettes d'une paramétrisation dudit maillage par un polyèdre simple. Les principes mathématiques correspondants sont rappelé en annexe (cette annexe fait partie de la présente description).

En pratique, lors de la reconstruction, le maillage de base $M_0$ est représenté sous une forme arborescente : chacune de ses faces est la racine d'un arbre dont les fils de chaque noeud sont les quatre faces obtenues après subdivision canonique. Les coefficients d'ondelettes sont indexés par leurs coordonnées barycentriques sur une face de $M_0$. Les subdivisions de face respectent une condition d'affinité.

Une technique de subdivision a été proposée par A. Certain, Jovan Popovic, T. DeRose, T. Duchamp, D. Salesin et W. Stuetzle, dans l'article "Interactive multiresolution surface viewing" (Computer Graphics Proceedings 1996).

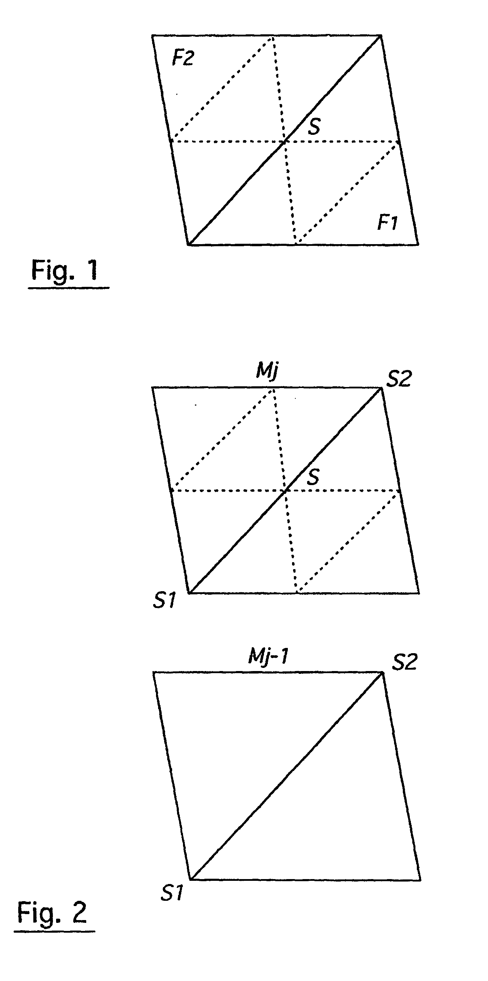

Cette technique consiste à opérer des subdivisions en observant une condition suffisante sur les sommets : un sommet est dit complet s'il est au milieu d'une arête partagée par deux faces qui sont subdivisées en quatre, ainsi que cela est illustré en figure 1.

Le principe est de partir du sommet indexant le coefficient d'ondelette considéré et de rendre complet, par subdivision, ses voisins, puis les voisins de ses voisins, récursivement jusqu'à ce que tous les sommets considérés soient complets. Cette règle provient de l'observation que cet algorithme est suffisant pour assurer une subdivision adaptée aux modifications apportées par le coefficient d'ondelette considéré.

Cette technique présente cependant un inconvénient important : elle induit la création de facettes inutiles, ce qui entraine une augmentation inutile du nombre des données nécessaires à la description du maillage. Plus précisément, des facettes inutiles sont créées par des subdivisions assurant la complétude des sommets évoqués plus haut.

En d'autres termes, il y a création, dans des zones relativement éloignées du support de l'ondelette considérée, de facette coplanaires, ce qui nuit inutilement à l'efficacité de la visualisation de l'objet.

On sait en effet que le nombre de données (et donc le nombre de facettes à des conséquences importantes, notamment lorsque l'objet concerné est animé, que la puissance du terminal est limitée et/ou que le débit de transmission est variable et/ou limité.

L'invention a notamment pour objectif de pallier ces inconvénients de l'état de l'art.

Plus précisément, un objectif de l'invention est de fournir un procédé de codage d'un maillage représentatif d'un objet en trois dimensions, qui produise un nombre de facettes restreint, par rapport à la technique connue, pour un niveau de qualité de restitution identique ou similaire.

Un autre objectif de l'invention est de fournir un tel procédé de codage, dont la complexité (notamment en termes de nombre d'opérations effectuées et de capacité de mémoire nécessaire) soit inférieure, ou à tout le moins, du même ordre de grandeur, aux techniques connues.

L'invention a également pour objectif de fournir un tel procédé de codage, permettant de disposer de plusieurs niveaux de qualité de restitution de l'objet, en fonction de critères divers (capacité de traitement du terminal, capacité des moyens de mémorisation disponible, débit de transmission, besoins de l'utilisateur...).

Encore un autre objectif de l'invention est de fournir un tel procédé de codage, permettant une reconstruction progressive de l'objet.

L'invention a également pour objectif, bien sûr, de fournir un procédé de reconstruction d'un objet codé selon ce procédé de codage.

Ces objectifs, ainsi que d'autres qui apparaîtront par la suite, sont atteints selon l'invention à l'aide d'un procédé de codage d'un maillage source (M) représentatif d'un objet en trois dimensions, dans lequel on détermine un maillage simple ($M_0$) présentant un nombre réduit de faces définies chacunes par des sommets et des arêtes, puis des coefficients dans une base d'ondelettes d'une fonction (f) dont ledit maillage source est l'image définie sur ledit maillage simple ($M_0$), de façon à fournir une décomposition dudit maillage source (M) en des maillages (ou sous-maillages) affinés successifs ($M_j$), selon un critère prédéterminé. Selon l'invention, chacune des faces d'un desdits maillages ($M_j$) est subdivisée en un nombre limité de facettes pour former le maillage de niveau supérieur ($M_{j+1}$), les subdivisions de ladite face correspondant uniquement à celles nécessaires pour respecter une condition d'affinité de ladite fonction (f) sur ladite face.

L'inventeur a en effet observé que la prise en compte d'un coefficient d'ondelette doit s'accompagner d'une subdivision locale au voisinage du sommet indexant l'ondelette en question, afin que cette dernière soit affine par morceaux sur chaque facette. Puisque les ondelettes sont des sommes de fonctions $\phi_i^j$, il suffit de savoir localiser le support d'une telle fonction et de subdiviser localement les facettes qui les contiennent jusqu'à ce que cette fonction soit affine sur chaque facette résultante.

On notera que l'on utilise indifféremment, par la suite, les termes "face" et "facette". En général, une "facette" correspond à une subdivision d'une "face".

Avantageusement, ledit maillage source (M) est décomposé en un ensemble d'arbres, chacun desdits arbres représentant une face dudit maillage simple ($M_0$) et comprenant des noeuds représentant chacun une face d'un maillage ($M_j$), ladite fonction (f) étant affine sur chacun desdites faces. Alors, chacun desdits arbres est le plus petit tel que, lorsqu'une face donnée est subdivisée en quatre facettes, le noeud correspondant comprend quatre fils représentant lesdites quatre facettes.

De façon avantageuse, le procédé de l'invention permet l'accès à plusieurs niveaux de qualité de codage, correspondant à chacun desdits maillages successifs.

Cela est aisé, du fait de la structure même des subdivisions, comme cela apparaîtra par la suite.

De façon préférentielle, lesdits maillages successifs sont obtenus par la mise en oeuvre d'un algorithme récursif. Le procédé est ainsi particulièrement simple à mettre en oeuvre.

Selon un mode de réalisation avantageux, ledit algorithme récursif comprend les étapes suivantes :

(a) réception d'un coefficient d'ondelette indexé par un sommet (s) de coordonnées barycentriques ($\alpha$, $\beta$, $\gamma$) sur une face $F_0$;
(b) pour chaque face voisine $F_i$ de $F_0$ contenant ledit sommet (s) :

- on pose $F = F_i$ ;

- on déduit des coordonnées barycentriques ($\alpha$, $\beta$, $\gamma$) les coordonnées dudit sommet (s) dans la base affine formée des sommets de la face F, encore notées ($\alpha$, $\beta$, $\gamma$) ;

- si les coordonnées $\alpha$, $\beta$ et $\gamma$ sont positives ou nulles et si deux d'entre elles sont strictement positives :

- on subdivise la face F ;
- on reprend le traitement à l'étape (b), pour les quatre fils de la face F successivement.

L'invention concerne également un procédé de reconstruction d'un maillage source (M) représentatif d'un objet en trois dimensions et codé selon le procédé de codage décrit ci-dessus.

Avantageusement, un tel procédé de reconstruction assure la reconstruction progressive dudit objet, à partir du maillage simple ($M_0$) puis à l'aide des maillages successifs ($M_i$).

De façon préférentielle, ce procédé de reconstruction permet l'accès à plusieurs niveaux de qualité de codage, correspondant à chacun desdits maillages successifs.

L'invention s'applique avantageusement à de nombreux domaines, et peut notamment s'appliquer à au moins un des domaines suivants :

- affichage d'objets maillés en trois dimensions sur un écran ;
- affichage progressif d'objets maillés en trois dimensions sur un écran, lesdits coefficients d'ondelettes étant pris en compte au fur et à mesure de leur arrivée ;
- affichage d'objets maillés en trois dimensions sur un écran à au moins deux niveaux de détail, un niveau de détail correspondant à un desdits maillages successifs ($M_i$) ;
- affichage de parties différentes d'un objet maillé avec au moins deux niveaux de détail différents ;
- compression d'un maillage d'un objet maillé.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :

- la figure 1, déjà commentée en préambule, illustre un sommet complet, selon la technique de Certain et Al. ;
- la figure 2 illustre le voisinage direct d'un sommet s, selon l'invention ;
- la figure 3 est un schéma synoptique général simplifié du procédé de codage selon l'invention ;
- la figure 4 est un schéma synoptique plus détaillé, reprenant et détaillant les étapes de localisation et de subdivision de la figure 3.

Le procédé de codage d'un maillage selon l'invention vise donc, notamment, à opérer le nombre minimum de subdivisions nécessaires tout en restant de même complexité algorithmique que la technique connue.

Dans toute la suite, on dira qu'un point s a pour coordonnées barycentriques $(\alpha,\beta,\gamma)$, sur une face $F_0$ si ses coordonnées barycentriques dans la base affine formée des sommets de $F_0$ sont $(\alpha,\beta,\gamma)$. On omettra aussi de préciser $M_0$ lorsqu'il n'y aura pas de confusion possible.

L'algorithme de base de l'invention, indépendant de toute implémentation, est le suivant :

1. Recevoir un coefficient d'ondelette indexé par un sommet s de coordonnées barycentriques $(\alpha,\beta,\gamma)$, sur une face $F_0$.
2. Pour chaque face voisine $F_i$ de $F_0$ contenant s :

    (a) $F = F_i$
    (b) Déduire de $(\alpha,\beta,\gamma)$ les coordonnées de s dans la base affine formée des sommets de F, encore notés $(\alpha,\beta,\gamma)$.
    (c) Si $\alpha$ ou $\beta$ ou $\gamma$ sont tous positifs ou nuls et deux d'entre eux sont strictement positifs

        i. Subdiviser F
        ii. Recommencer en (b) avec pour F ses quatre fils successivement

A l'arrêt de l'algorithme, on dispose d'une subdivision minimale de $M_0$ obtenue avec une complexité en temps linéaire par rapport au degré de subdivision. Le débit de transmission et/ou la capacité de stockage nécessaires sont donc optimisés.

Il convient de noter que l'invention permet de déterminer non seulement l'arbre minimal correspondant à f, mais aussi à chacune de ses approximations, en tronquant la somme (voir l'annexe) :

$$f = \sum_i c_i^0 \phi_i^0 + \sum_{j \geq 0} \sum_i d_i^j \psi_i^j$$

Cette somme étant justement obtenue de façon progressive, en ajoutant des termes successivement, on passe d'un arbre représentant une approximation f; à un arbre représentant :

$$f_i + c_i^{j'} \psi_i^{j'}:$$

(où $c_i^{j'}$ est un coefficient d'ondelette transmis en n'effectuant que les subdivisions de facettes strictement nécessaire à la condition d'affinité sur chaque face).

Il est ainsi possible de reconstruire progressivement l'objet, et/ou de choisir un niveau de qualité (correspondant à l'indice j).

On peut représenter le maillage progressivement reconstruit comme n 4-arbres décrivant les divisions successives des n faces du maillage $M_0$ transmis préalablement aux coefficients d'ondelettes. Chaque coefficient d'ondelette reçu est accompagné de trois entiers A, B et C proportionnels aux coordonnées barycentriques du sommet s indexant l'ondelette associée au coefficient, ainsi que d'un tiers désignant la face $F_0$ indiquant une facette contenant s.

Si s appartient à $M_j+1$, A, B et C sont déduits des coordonnées barycentriques $\alpha,\beta$ et y de s dans la base affine formée des sommets de $F_0$ par :

$$(A, B, C) = 2^{j+1} (\alpha,\beta, \gamma)$$

L'ondelette centrée en s est de la forme :

$$\psi_i^j = \phi_i^{j+1} + \sum_{k \in D} \alpha_k \phi_k^j$$

où D est un voisinage de s sur le maillage $M_j$. La technique exposée dans la partie précédente doit donc être appliquée à chacune des fonctions qui apparaissent dans cette somme, avec leurs coordonnées barycentriques respectives.

Ces coordonnées barycentriques sont exprimées dans la même base affine que celles de s, et déduites de ces dernières : le voisinage D est, pour un k fixé, l'ensemble des sommets de $M_j$ distants d'au plus k arêtes de l'une des extrémités $s_1$ et $s_2$ de l'arête de $M_j$ contenant s, ainsi que cela est illustré en figure 2. Les coordonnées barycentriques de ces deux sommets sont caractérisées par le critère suivant :

Le triplet $(\alpha', \beta', \gamma)$ représente les coordonnées de l'un de ces deux points si et seulement si le triplet d'entiers $(A', B', C') = 2^j (\alpha', \beta', \gamma)$ vérifie :

$$(2A' - A, 2B' - B, 2C' - C) \in \varepsilon,$$

où $\varepsilon$ désigne l'ensemble :

$$\{(1,-1,0), (-1, 1, 0), (1,0,1), (-1, 0, 1), (0, 1,-1), (0,-1,1)\}$$

Ces deux voisins directs de s, $s_1$ et $s_2$, étant déterminés, les autres sont déterminés en appliquant k fois le critère suivant :

soient u et v deux sommets de coordonnées barycentriques $(\alpha',\beta',\gamma)$ et $(\alpha'',\beta'', \gamma')$ respectivement, sur une face F. Alors u et v sont reliés par une arête sur $M_j$ si et seulement si :

$$2^j(\alpha'-\alpha'', \beta'-\beta'', \gamma'-\gamma'') \in \varepsilon,$$

ce qui donne explicitement le liste des sommets dans le voisinage D.

Chacun de ces sommets, muni de ses coordonnées barycentriques $(\alpha, \in \beta, \gamma)$, peut ainsi donner lieu aux subdivisions nécessaires aux modifications apportées par la fonction $\phi_i^j$ correspondante, selon une variante de l'algorithme décrit plus haut : on part du couple $(A, B, C) = 2^j (\alpha,\beta,\gamma)$ où j est le plus petit entier tel que A, B et C soient entiers, et on applique à chaque subdivision la matrice de changement de base à ce triplet, de telle sorte que l'on ne fait des tests de positivité que sur des entiers.

Les quatre matrices de passage de la base affine représentée par les trois sommets d'une face aux bases affines représentées par les trois sommets de chacun des fils sont explicitement :

$$\begin{pmatrix} 1 & -1 & -1 \\ 0 & 2 & 0 \\ 0 & 1 & 2 \end{pmatrix}, \begin{pmatrix} 2 & 0 & 0 \\ -1 & 1 & -1 \\ 0 & 0 & 2 \end{pmatrix}, \begin{pmatrix} 2 & 0 & 0 \\ 0 & 2 & 0 \\ -1 & -1 & 1 \end{pmatrix} \text{ et } \begin{pmatrix} 1 & 1 & -1 \\ -1 & 1 & 1 \\ 1 & -1 & 1 \end{pmatrix}$$

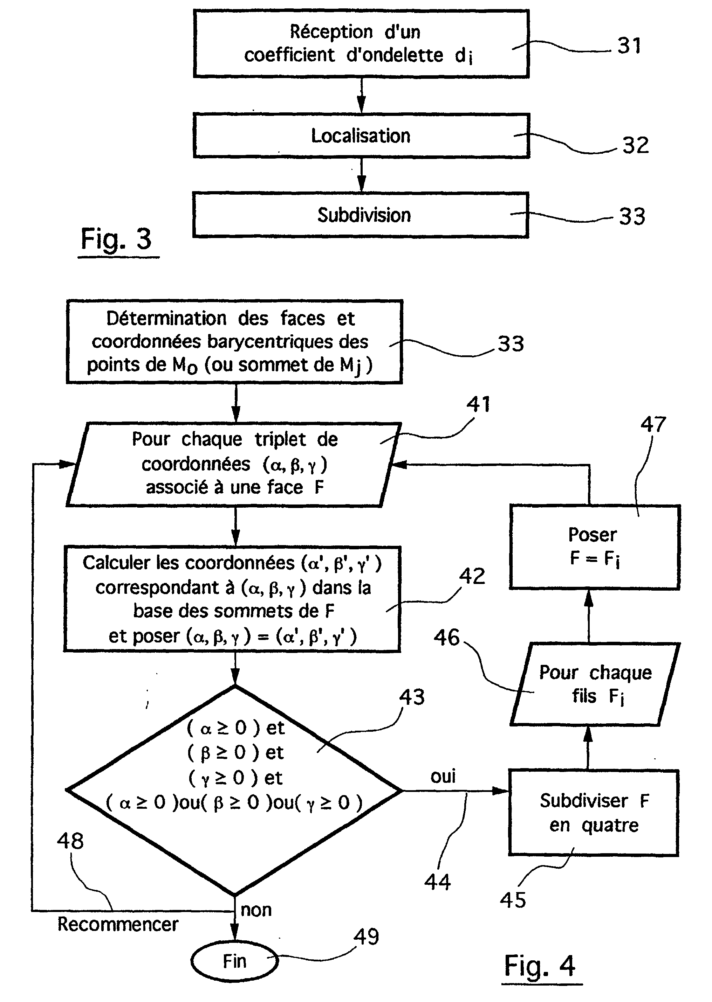

Le procédé décrit ci-dessdus est illustré, de façon très simplifiée, en figure 3. Pour chaque coefficient d'ondelette $D_i^j$ reçu (31), on effectue une étape de localisation 32, dans laquelle on ramène les éléments à traiter dans la base affine adéquate, puis une étape de subdivision (33) de chaque face considérée.

Un exemple plus détaillé de mise en oeuvre de ces deux dernières étapes 32 et 33 est illustré en figure 4 .

La localisation 32 consiste à, $\psi_i^j$ s'écrivant comme une somme pondérée de fonctions d'échelle au niveau j+1, déterminer les faces et les coordonnées barycentriques des points de $M_0$ (ou sommets de $M_j$) indexant ces fonctions d'échelle.

Ensuite, pour chaque triplet de coordonnées $(\alpha,\beta,\gamma)$ associé à une face F (41), on calcule (42) les coordonnées $(\alpha',\beta'$ et $y')$ correspondant à $(\alpha,\beta,\gamma)$ dans la base des sommets de F et on pose $(\alpha,\beta,\gamma) = (\alpha',\beta'$ et $\gamma)$.

On effectue alors le test 43 :

$$(\alpha \geq 0) \text{ et } (\beta \geq 0) \text{ et } (\gamma \geq 0) \text{ et } ((\alpha\beta > 0) \text{ ou } (\alpha\gamma > 0) \text{ ou } (\beta\gamma > 0))$$

Si le résultat est positif (44), on effectue une boucle de récursivité consistant à subdiviser (45) la face F en quatre fils $F_i$, puis, pour chaque fils $F_i$ (46), poser F= $F_i$ (47) et reprendre au niveau de l'étape 41, de façon récursive.

Si le résultat du test 43 est négatif, on reprend (48) le traitement pour une nouvelle face F (41). Lorsque toutes les faces F ont été traitées, la subdivision est terminée (49).

ANNEXE

Une surface S dans l'espace peut être représentée comme l'image d'une fonction continue injective définie sur un polyèdre $M_0$ de même type topologique et à valeurs dans $\mathbf{R}^3$. On dit alors que la surface est paramétrée par le polyèdre, et l'on appelle paramétrisation la dite fonction. Cette fonction est un triplet de fonctions à valeurs dans $\mathbf{R}$, qui peuvent chacune être développées dans une base de l'espace $C^0(M_0)$ des fonctions continues sur le polyèdre à valeurs dans $\mathbf{R}$.

Dans le cas des surfaces maillées, on utilise cette technique pour obtenir une représentation compressée du maillage. En outre, l'utilisation d'ondelettes comme fonctions de base en permet une représentation progressive, de la forme la plus grossière à la plus détaillée.

Ces fonctions ne sont pas des ondelettes au sens classique, mais satisfont des relations de raffinement généralisant le concept d'analyse multirésolution : notons $M_0$ un polyèdre sur lequel est défini une paramétrisation d'une surface $M$. On considère le sous-espace $S_0$ de $C^0(M_0)$ engendré par les fonctions $\phi_i^0$ définies comme suit: $\phi_i$ est affine sur chaque facette, vaut 1 sur le i-ème sommet et 0 sur tous les autres.

On définit de la même façon les sous-espaces $S_j$ engendrés par les fonctions $\phi_i^j$ définies de la même manière mais en remplaçant $M_0$ par le maillage $M_j$ obtenu en subdivisant canoniquement chaque facettes de $M_{j-1}$. Les espaces $S_j$ sont de dimension finie, emboités, $S_0$ étant le plus petit, et toute fonction continue de $M_0$ dans $\mathbf{R}$ peut être approchée uniformément par une fonction d'un $S_j$ pour $j$ assez grand.

C'est cette inclusion qui permet le codage progressif: si on note $W_j$ un suppplémentaire de $S_j$ dans $S_{j+1}$, et $\{\psi_i^j\}_i$ (les ondelettes) une base de $W_j$, l'ensemble

$$\{\phi_i^0\}_i \cup \bigcup_{j \geq 0} \{\psi_i^j\}_i$$

forme une base de $C^0(M_0)$. La fonction $\rho$ paramétrant $M$ s'écrit donc de manière unique

$$\rho = \sum_i c_i \phi_i^0 + \sum_{j \geq 0} \sum_i d_i^j \psi_i^j,$$

où les $c_i$ et les $d_i^j$ sont dans $\mathbf{R}^3$, et sont appelés coefficients d'ondelettes.

En pratique, les ondelettes sont choisies de telle sorte que leur support permette une détermination des coefficients d'ondelettes en $O(n)$, où $n$ est le nombre de sommets du maillage $M$: pour $k$ entier fixé, si on note $D_{k,i}$ l'ensemble des indices des sommets d'un maillage $M_j$ qui sont à moins de $k$ arêtes de distance du sommet $i$, l'ondelette $\psi_i^j$ est donnée par

$$\psi_i^j = \phi_i^{j+1} + \sum_{l \in D_{k,i}} \alpha_l \phi_l^j,$$

de telle sorte que $\psi_i^j$ soit à support dans $D_{k+1,i}$.

Ainsi, lors de la reconstruction, l'influence d'un coefficient d'ondelette est limitée à un tel voisinage.

**Revendications**

1. Procédé de codage d'un maillage source (M) représentatif d'un objet en trois dimensions, dans lequel on détermine un maillage simple ($M_0$) présentant un nombre réduit de faces définies chacune par des sommets et des arêtes, puis des coefficients dans une base d'ondelettes d'une fonction (f) dont ledit maillage source est l'image définie sur ledit maillage simple ($M_0$), de façon à fournir une décomposition dudit maillage source (M) en des maillages affinés successifs ($M_j$), selon un critère prédéterminé,
   **caractérisé en ce qu'**il comprend une étape de subdivision de chacune des faces d'un desdits maillages ($M_j$) en un nombre limité de facettes pour former le maillage de niveau supérieur ($M_{j+1}$),
   mettant en oeuvre un critère d'arrêt pilotant l'interruption de la subdivision d'une ladite face lorsque ladite fonction (f) est affine sur ladite face.

2. Procédé de codage selon la revendication 1, **caractérisé en ce que** ledit critère d'arrêt comprend une analyse des coordonnées barycentriques ($\alpha$, $\beta$, $\gamma$) d'un sommet (s) indexant un coefficient d'ondelette.

3. Procédé de codage selon la revendication 2, **caractérisé en ce que** ledit critère d'arrêt consiste à vérifier si les coordonnées $\alpha$, $\beta$ et $\gamma$ sont positives ou nulles et si deux d'entre elles sont strictement positives (43), l'interruption étant décidé si cela n'est pas le cas.

4. Procédé de codage selon l'une quelconque des revendications 1 à 3, **caractérisé en ce que** ledit maillage source (M) est décomposé en un ensemble d'arbres, chacun desdits arbres représentant une face dudit maillage simple ($M_0$) et comprenant des noeuds représentant chacun une face d'un maillage ($M_j$), ladite fonction (f) étant affine sur chacun desdites faces,
   et chacun desdits arbres étant le plus petit tel que, lorsqu'une face donnée est subdivisée en quatre facettes, le noeud correspondant comprend quatre fils représentant lesdites quatre facettes.

5. Procédé de codage selon l'une quelconque des revendications 1 à 4, **caractérisé en ce qu'**il permet l'accès à plusieurs niveaux de qualité de codage, correspondant à chacun desdits maillages successifs.

6. Procédé de codage selon l'une quelconque des revendications 1 à 5, **caractérisé en ce que** lesdits maillages successifs sont obtenus par la mise en oeuvre d'un algorithme récursif.

7. Procédé de codage selon l'une quelconque des revendications 3 à 6, **caractérisé en ce que** ledit algorithme récursif comprend les étapes suivantes :

   (a) réception (31) d'un coefficient d'ondelette indexé par un sommet (s) de coordonnées barycentriques ($\alpha$, $\beta$, $\gamma$) sur une face $F_0$ ;
   (b) pour chaque face voisine (47) $F_i$ de $F_0$ contenant ledit sommet (s):

   - on pose $F = F_i$ ;
   - on déduit des coordonnées barycentriques ($\alpha$, $\beta$, $\gamma$) les coordonnées dudit sommet (s) dans la base affine (42) formée des sommets de la face $F_i$ encore notées ($\alpha$, $\beta$, y) ;
   - si les coordonnées $\alpha$, $\beta$ et $\gamma$ sont positives ou nulles et si deux d'entre elles sont strictement positives (43) :

        - on subdivise la face F (45) ;
        - on reprend le traitement à l'étape (b), pour les quatre fils de la face F successivement.

8. Procédé de codage selon l'une quelconque des revendications 1 à 7, **caractérisé en ce qu'**il est mis en oeuvre dans au moins un des domaines suivants :

   - affichage d'objets maillés en trois dimensions sur un écran ;
   - affichage progressif d'objets maillés en trois dimensions sur un écran, lesdits coefficients d'ondelettes étant pris en compte au fur et à mesure de leur arrivée ;
   - affichage d'objets maillés en trois dimensions sur un écran à au moins deux niveaux de détail, un niveau de détail correspondant à un desdits maillages successifs ($M_i$) ;
   - affichage de parties différentes d'un objet maillé avec au moins deux niveaux de détail différents ;
   - compression d'un maillage d'un objet maillé.

**9.** Procédé de reconstruction d'un maillage source (M) représentatif d'un objet en trois dimensions et codé selon le procédé de codage de l'une quelconque des revendications 1 à 8, **caractérisé en ce que** ledit objet est reconstruit progressivement, à partir du maillage simple ($M_0$) puis à l'aide des maillages successifs ($M_j$).

**10.** Procédé de reconstruction selon la revendication 9, **caractérisé en ce qu'**il permet l'accès à plusieurs niveaux de qualité de codage, correspondant à chacun desdits maillages successifs.

**11.** Procédé de codage selon l'une quelconque des revendications 1 à 7, **caractérisé en ce qu'**il est mis en oeuvre dans au moins un des domaines suivants :

- affichage d'objets maillés en trois dimensions sur un écran ;
- affichage progressif d'objets maillés en trois dimensions sur un écran, lesdits coefficients d'ondelettes étant pris en compte au fur et à mesure de leur arrivée ;
- affichage d'objets maillés en trois dimensions sur un écran à au moins deux niveaux de détail, un niveau de détail correspondant à un desdits maillages successifs ($M_i$) ;
- affichage de parties différentes d'un objet maillé avec au moins deux niveaux de détail différents ;
- compression d'un maillage d'un objet maillé.


**Patentansprüche**

**1.** Verfahren zum Kodieren eines Quellennetzwerkes (M), welches für einen dreidimensionalen Gegenstand repräsentativ ist, wobei ein Einfachnetzwerk ($M_0$) mit einer verringerten Zahl von jeweils durch Gipfelpunkte und Kanten definierten Flächen und danach Koeffizienten in einer Wavelet-Basis einer Funktion (f) festgelegt werden, von der das Quellennetzwerk die auf dem Einfachnetzwerk ($M_0$) definierte Abbildung ist, um eine Zerlegung des Quellennetzwerkes (M) in eine Folge verfeinerter Netzwerke ($M_j$) nach einem vorgegebenen Kriterium zu erreichen, **dadurch gekennzeichnet, dass** es einen Unterteilungsschritt einer jeden Fläche eines der erwähnten Netzwerke ($M_j$) in eine begrenzte Zahl von Facetten umfasst, um das Netzwerk der nächsthöheren Stufe ($M_{j+1}$) zu bilden, wobei ein Abbruchkriterium angewandt wird, das die Unterbrechung der Unterteilung einer der Flächen bewirkt, wenn die Funktion (f) auf dieser Fläche affin ist.

**2.** Kodierungsverfahren nach Anspruch 1, **dadurch gekennzeichnet, dass** das Abbruchkriterium eine Analyse der baryzentrischen Koordinaten ($\alpha$, $\beta$, $\gamma$) eines Gipfelpunktes (s) umfasst, der einen Wavelet-Koeffizienten indiziert.

**3.** Kodierungsverfahren nach Anspruch 2, **dadurch gekennzeichnet, dass** das Abbruchkriterium darin besteht, zu prüfen, ob die Koordinaten $\alpha$, $\beta$ und $\gamma$ positiv oder null sind und ob zwei unter ihnen streng positiv sind (43), wobei der Abbruch des Verfahrens entschieden wird, wenn dies nicht zutrifft.

**4.** Kodierungsverfahren nach einem der Ansprüche 1 bis 3, **dadurch gekennzeichnet, dass** das Quellennetzwerk (M) in eine Menge von Baumstrukturen zerlegt wird, wobei jede dieser Baumstrukturen eine Fläche des Einfachnetzwerkes ($M_0$) darstellt und Knoten umfasst, die jeweils eine Fläche eines Netzwerkes ($M_j$) darstellen, wobei die Funktion (f) über eine jede dieser Flächen affin ist und,
wobei jede der Baumstrukturen die kleinste von der Art ist, die bewirkt, dass wenn eine gegebene Fläche in vier Facetten unterteilt ist, der entsprechende Knoten vier Fäden umfasst, welche diese vier Facetten darstellen.

**5.** Kodierungsverfahren nach einem der Ansprüche 1 bis 4, **dadurch gekennzeichnet, dass** es den Zugang zu mehreren Ebenen von Kodierungsqualität ermöglicht, die jeweils einem der aufeinanderfolgenden Netzwerke entsprechen.

**6.** Kodierungsverfahren nach einem der Ansprüche 1 bis 5, **dadurch gekennzeichnet, dass** die aufeinanderfolgenden Netzwerke durch Anwendung eines rekursiven Algorithmus erhalten werden.

**7.** Kodierungsverfahren nach einem der Ansprüche 3 bis 6, **dadurch gekennzeichnet, dass** der rekursive Algorithmus die folgenden Schritte umfasst:

(a) Empfang (31) eines Wavelet-Koeffizienten, welcher durch einen Gipfelpunkt (s) mit den baryzentrischen Koordinaten ($\alpha$, $\beta$, $\gamma$) auf einer Fläche $F_0$ indiziert wird;
(b) für jede an $F_0$ angrenzende Fläche (47) $F_i$, die den erwähnten Gipfelpunkt (s) umfasst, erfolgt folgendes:

- es wird F = $F_i$ angesetzt;
- es werden aus den baryzentrischen Koordinaten ($\alpha$, $\beta$, )$\gamma$ die Koordinaten des Gipfelpunktes (s) in der affinen Basis (42) abgeleitet, die von den Gipfelpunkten der Fläche $F_i$ gebildet werden und die ebenfalls mit ($\alpha$, $\beta$, $\gamma$) bezeichnet werden;
- wenn die Koordinaten $\alpha$, $\beta$und $\gamma$positiv oder null und wenn zwei unter ihnen streng positiv (43) sind, dann wird:

- die Fläche F (45) unterteilt;
- die Verarbeitung am Schritt (b) nacheinander für die vier Fäden der Fläche F wiederaufgenommen.

8. Kodierungsverfahren nach einem der Ansprüche 1 bis 7, **dadurch gekennzeichnet, dass** es in mindestens einem der folgenden Bereiche eingesetzt wird:

   - Anzeige von nach einem dreidimensionalen Netzwerk aufgeteilten Gegenständen auf einem Bildschirm;
   - fortschreitende Anzeige von nach einem dreidimensionalen Netzwerk aufgeteilten Gegenständen auf einem Bildschirm, wobei die Wavelet-Koeffizienten der Reihe ihrer Ankunft nach berücksichtigt werden;
   - Anzeige von nach einem dreidimensionalen Netzwerk aufgeteilten Gegenständen auf einem Bildschirm, mit mindestens zwei Detailebenen, wobei eine dieser Detailebenen einem der Netzwerke ($M_i$) aus der Folge entspricht;
   - Anzeige verschiedener Teile eines nach einem Netzwerk aufgeteilten Gegenstandes mit mindestens zwei verschiedenen Detailebenen;
   - Komprimierung des Netzwerkes einer der nach einem Netzwerk aufgeteilten Gegenstände.

9. Wiederherstellungsverfahren eines Quellennetzwerkes (M), das für einen dreidimensionalen Gegenstand repräsentativ ist, welches nach einem Kodierverfahren nach einem der Ansprüche 1 bis 8 kodiert ist, **dadurch gekennzeichnet, dass** der Gegenstand, ausgehend von dem Einfachnetzwerk ($M_0$) und dann mit Hilfe der aufeinanderfolgenden Netzwerke ($M_i$), allmählich wiederhergestellt wird.

10. Wiederherstellungsverfahren nach Anspruch 9, **dadurch gekennzeichnet, dass** es den Zugang zu mehreren Ebenen der Kodierungsqualität ermöglicht, die jeweils einer der aufeinanderfolgenden Zerlegung nach Netzwerken entspricht.

11. Kodierverfahren nach einem der Ansprüche 1 bis 7, **dadurch gekennzeichnet, dass** es in mindestens einem der folgenden Bereiche eingesetzt wird:

    - Anzeige von nach einem dreidimensionalen Netzwerk aufgeteilten Gegenständen auf einem Bildschirm;
    - fortschreitende Anzeige von in ein Netzwerk aufgeteilte, dreidimensionalen Körpern auf einem Bildschirm, wobei die Wavelet-Koeffizienten der Reihe ihrer Ankunft nach berücksichtigt werden;
    - Anzeige von nach einem dreidimensionalen Netzwerk aufgeteilten Gegenständen auf einem Bildschirm, mit mindestens zwei Detailebenen, wobei eine dieser Detailebenen einem der Netzwerke ($M_i$) aus der Folge entspricht;
    - Anzeige verschiedener Teile eines nach einem Netzwerk aufgeteilten Gegenstandes mit mindestens zwei verschiedenen Detailebenen;
    - Komprimierung des Netzwerkes einer der nach einem Netzwerk aufgeteilten Gegenstände.

**Claims**

1. Method for coding a source mesh (M) representing an object in three dimensions, in which the following are determined: a simple mesh ($M_0$) having a reduced number of faces, each defined by vertices and edges, and then coefficients in a wavelet base of a function (f), of which the said source mesh is the image defined on the said simple mesh ($M_0$), so as to provide a decomposition of the said source mesh (M) into successive refined meshes ($M_j$), according to a predetermined criterion,
**characterised in that** it comprises a step of subdividing each of the faces of one of the said meshes ($M_j$) into a limited number of facets, in order to form the higher-level mesh ($M_{j+1}$),
implementing a termination criterion which entails stopping the subdivision of the said face when the said function (f) is affine on the said face.

**2.** Coding method according to Claim 1, **characterised in that** the said termination criterion comprises an analysis of the barycentric coordinates ($\alpha$, $\beta$, $\gamma$) of a vertex (s) indexing a wavelet coefficient.

**3.** Coding method according to Claim 2, **characterised in that** the said termination criterion consists in checking whether the coordinates $\alpha$, $\beta$, $\gamma$ are positive or zero, and whether two of them are strictly positive (43), the decision being made to stop if this is not the case.

**4.** Coding method according to any one of Claims 1 to 3, **characterised in that** the said source mesh (M) is decomposed into a set of trees, each of the said trees representing one face of the said simple mesh ($M_0$) and comprising nodes which each represent one face of a mesh ($M_j$), the said function (f) being affine on each of the said faces, and each of the said trees being the smallest such that, when a given face is subdivided into four facets, the corresponding node comprises four threads representing the said four faces.

**5.** Coding method according to any one of Claims 1 to 4, **characterised in that** it allows access to a plurality of coding quality levels, corresponding to each of the said successive meshes.

**6.** Coding method according to any one of Claims 1 to 5, **characterised in that** the said successive meshes are obtained by implementing a recursive algorithm.

**7.** Coding method according to any one of Claims 3 to 6, **characterised in that** the said recursive algorithm comprises the following steps:

(a) receiving (31) a wavelet coefficient indexed by a vertex (s) with barycentric coordinates ($\alpha$, $\beta$, $\gamma$) on a face $F_0$;
(b) for each neighbouring face (47) $F_i$ of $F_0$ containing the vertex (s):

- F = $F_i$ is set;
- the coordinates of the said vertex (s) in the affine base (42) formed by the vertices of the face $F_i$, also denoted ($\alpha$, $\beta$, $\gamma$), are deduced from the barycentric coordinates ($\alpha$, $\beta$, $\gamma$);
- if the coordinates $\alpha$, $\beta$ and $\gamma$ are positive or zero, and if two of them are strictly positive (43):

- the face F is subdivided (45);
- the processing in step (b) is repeated successively for the four threads of the face F.

**8.** Coding method according to any one of Claims 1 to 7, **characterised in that** it is implemented in at least one of the following fields:

- displaying three-dimensionally meshed objects on a screen;
- progressively displaying three-dimensionally meshed objects on a screen, the said wavelet coefficients being taken into account as they arrive;
- displaying three-dimensionally meshed objects on a screen at at least two levels of detail, one level of detail corresponding to one of the said successive meshes ($M_j$);
- displaying different parts of a meshed object with at least two different levels of detail;
- compressing a mesh of a meshed object.

**9.** Method for reconstructing a source mesh (M) which represents an object in three dimensions and has been coded according to the coding method of any one of Claims 1 to 8, **characterised in that** the said object is reconstructed progressively, starting from a simple mesh ($M_0$) and then with the aid of successive meshes ($M_j$).

**10.** Reconstruction method according to Claim 9, **characterised in that** it allows access to a plurality of coding quality levels, corresponding to each of the said successive meshes.

**11.** Coding method according to any one of Claims 1 to 7, **characterised in that** it is implemented in at least one of the following fields:

- displaying three-dimensionally meshed objects on a screen;
- progressively displaying three-dimensionally meshed objects on a screen, the said wavelet coefficients being taken into account as they arrive;
- displaying three-dimensionally meshed objects on a screen at at least two levels of detail, one level of detail corresponding to one of the said successive meshes ($M_j$) ;
- displaying different parts of a meshed object with at least two different levels of detail;
- compressing a mesh of a meshed object.

Fig. 1

Fig. 2

Fig. 3

Fig. 4